# FASCICULE DE BREVET EUROPEEN

(11) **EP 1 040 172 B1**
(45) Date de publication et mention de la délivrance du brevet: **07.11.2001**
(21) Numéro de dépôt: 98962492.9
(22) Date de dépôt: 17.12.1998
(51) Int. Cl.: C09J 175/04, C08G 18/10, C08G 18/12

(54) **ADHESIF THERMOFUSIBLE RETICULABLE PAR L'HUMIDITE A BASE DE PREPOLYMERE POLYURETHANE**
FEUCHTIGKEITSHÄRTENDER SCHMELZKLEBSTOFF AUF DER BASIS EINES POLYURETHANPRÄPOLYMEREN
MOISTURE-SETTING THERMOFUSIBLE ADHESIVE BASED ON POLYURETHANE PREPOLYMER

(30) Priorité: 19.12.1997 FR 9716202
(43) Date de publication de la demande: 04.10.2000
(73) Titulaire: Ato Findley S.A., 92800 Puteaux (FR)
(72) Inventeur: MISKOVIC, Michel, F-60200 Compiègne (FR); BAUDUIN, François, F-60280 Margny-les-Compiègne (FR); BOUTTEFORT, Patrick, F-60280 Margny-les-Compiègne (FR); CHARTREL, Jean-François, F-60400 Cuts (FR)
(74) Mandataire: Ohresser, François
(86) Numéro de dépôt international: FR9802763
(87) Numéro de publication internationale: WO9932568

(56) Documents cités:
- EP-A- 0 152 497
- EP-A- 0 823 446
- DE-A- 19 646 879
- CHEMICAL ABSTRACTS, vol. 116, no. 24, 15 juin 1992 Columbus, Ohio, US; abstract no. 237061x, XP002073145 & JP 04 008786 A (SUNSTAR ENGINEERING INC.) 13 janvier 1992
- DATABASE WPI Section Ch, Week 9538 Derwent Publications Ltd., London, GB; Class A95, AN 95-284038 XP002073085 & CA 2 122 942 A (KIMBERLY CLARK CORP) cité dans la demande

## Description

L'invention concerne un adhésif thermofusible réticulable par l'humidité à base de prépolymère polyuréthane, utilisable notamment dans le domaine de l'hygiène.

Il est désormais habituel d'utiliser des systèmes de fixation du type VELCRO® pour confectionner des articles jetables relevant du domaine de l'hygiène, notamment des couches pour bébé ou adulte incontinent et des articles pour l'hygiène féminine. Il est bien connu que les systèmes du type précité comportent deux éléments : un premier élément constitué d'une multitude de fins crochets et un deuxième élément constitué d'une multitude de fines boucles. Par simple pression sur les éléments superposés, on fait pénétrer les crochets dans les boucles ce qui permet d'obtenir un assemblage solide. La liaison entre les deux éléments peut être rompue par l'application d'une force suffisante. Les deux éléments peuvent être assemblés et séparés à plusieurs reprises sans diminution notable de la tenue de l'assemblage.

Dans le cas particulier des couches jetables, ces systèmes de fixation sont disposés sur les parties arrière et frontale formant la ceinture de la couche lorsqu'elle est portée par l'utilisateur (voir US-A-5 176 670).

L'élément comportant les boucles est fixé sur la partie frontale de la couche, les boucles étant dirigées vers l'extérieur. Cet élément est généralement constitué d'un matériau de faible épaisseur, à base de fibres en polyoléfine ou d'autres fibres synthétiques, en particulier un tricotage (aussi appelé maille textile). L'élément se présente le plus souvent sous la forme d'une bande de dimension variable, éventuellement décorée de motifs, qui est collée sur l'enveloppe externe de la couche. Cette enveloppe peut consister en un film imperméable aux liquides, par exemple un film de polyéthylène ou de polypropylène, ou en un non-tissé imperméable aux liquides et perméable à la vapeur.

Le collage de l'élément comportant les boucles sur le matériau imperméable peut être réalisé au moyen d'adhésifs thermoplastiques du type des polyoléfines ou des uréthanes (voir CA-A-2 122 942) ou d'adhésifs polyuréthane réticulables par l'humidité.

Industriellement, le collage est effectué à une cadence élevée, c'est-à-dire à une vitesse pouvant excéder 150 mètres par minute. Les dispositifs de collage opèrent par enduction du matériau imperméable au moyen de l'adhésif liquide par exemple avec une buse à lèvre. L'élément comportant les boucles est contre-collé sur le film imperméable, et l'assemblage ainsi formé est calandré et bobiné.

La quantité d'adhésif déposé doit être soigneusement contrôlée : trop faible, elle ne permet pas un collage satisfaisant et trop élevée, elle traverse les pores de l'élément contre-collé au risque de se répandre sur les boucles ce qui est préjudiciable à la fixation de l'élément comportant les crochets.

Il est avantageux économiquement de chercher à limiter la quantité d'adhésif déposé sur le film imperméable en maintenant à la fois les performances du collage et la cadence élevée propre au collage industriel.

L'adhésif doit en outre remplir des conditions liées à l'usage spécifique dans le domaine de l'hygiène humaine. Il doit notamment présenter un fluage substantiellement nul à la température du corps de l'utilisateur et avoir une toxicité aussi faible que possible. Ainsi, dans le cas des adhésifs à base de polyuréthanes, on accepte en général une teneur en monomère isocyanate libre inférieure à 0,15 % en poids de l'adhésif.

La Demanderesse a maintenant trouvé un nouvel adhésif qui permet de remédier à ces inconvénients.

L'invention se rapporte à un adhésif thermofusible réticulable par l'humidité qui est constitué d'un prépolymère polyuréthane obtenu par polyaddition d'au moins un polyol avec au moins un isocyanate choisi dans le groupe des diisocyanates trimérisés en isocyanurates et des produits de réaction de diisocyanates avec l'eau, ledit prépolymère ayant une teneur en NCO libres comprise entre 1 et 25 % en poids, de préférence 2 et 15 % en poids.

De manière avantageuse, l'adhésif thermofusible réticulable par l'humidité est obtenu par polyaddition d'au moins un polyol avec au moins un isocyanate choisi parmi les diisocyanates trimérisés en isocyanurates.

Le polyol est généralement choisi parmi les polyéthers polyols, les polyesters polyols et les polyols insaturés.

Les polyéthers polyols sont généralement choisis parmi les polyéthers polyols aliphatiques et aromatiques, et les mélanges de ces composés. De préférence, leur masse moléculaire moyenne est comprise entre 200 et 9000 et leur fonctionnalité hydroxyle est comprise entre 2 et 4,6.

A titre d'exemples de polyéthers polyols aliphatiques, on peut citer les dérivés oxyalkylés de diols tels que les polypropylène-glycols, ou de triols tels que le glycérol, le triméthylolpropane et l'hexane-1,2,6-triol, les polymères d'oxyde d'éthylène, de propylène ou de butylène, les copolymères d'oxyde d'éthylène et d'oxyde de propylène, les composés précités à terminaison silanyle et les dérivés oxyalkylés de diphényles tels que les dérivés oxyéthylénés ou oxypropylénés en position 4,4' du diphénylméthane.

De préférence, on utilise les dérivés oxypropylés du glycérol, les polymères d'oxyde de propylène ou de butylène et les copolymères d'oxyde d'éthylène et d'oxyde de propylène.

Les polyesters polyols sont généralement choisis parmi les polyesters polyols aliphatiques et aromatiques, et les mélanges de ces composés. De préférence, leur masse moléculaire moyenne est comprise entre 250 et 7000 et leur fonctionnalité hydroxyle est comprise entre 2 et 3.

A titre d'exemples, on peut citer les polyesters polyols résultant de la condensation de polyols aliphatiques, cycliques ou aromatiques tels que l'éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la N-méthyldiméthanolamine et les mélanges de ces composés avec un acide tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que l'anhydride maléique ou phtalique, ou une lactone telle que la caprolactone.

De préférence, on utilise les polyesters polyols résultant de la condensation de l'éthanediol, du 1,3-propanediol et/ou du 1,6-hexanediol avec l'acide adipique et/ou l'acide phtalique.

Les polyols insaturés sont généralement choisis parmi les polyols et les mélanges de polyols ayant de préférence une masse moléculaire comprise entre 1200 et 3000.

A titre d'exemples, on peut citer le polybutadiène et le polyisoprène à terminaisons hydroxylées.

De manière avantageuse, les polyols précités sont amorphes.

Les polyols précités peuvent également être utilisés en mélange avec d'autres composés hydroxylés.

On peut ainsi utiliser un monol ou un mélange de monols, en particulier les poly(éthylène/butylène)monols tels que le KRATON LIQUID™ L-1203 Polymer commercialisé par Shell, ou un polyol ou un mélange de polyols choisis parmi les poly(éthylène/butylène)diols tels que le KRATON LIQUID™ Polymer HPVM-2203 commercialisé par Shell, les copolymères de l'éthylène, de l'acétate de vinyle et de l'acrylate de 2-hydroxyéthyle tels que l'OREVAC® 9402 commercialisé par ELF ATOCHEM, les résines indène/coumarone modifiées par du phénol, par exemple NOVARES CA120 commercialisée par VFT, et les résines tackifiantes hydroxylées, par exemple REAGEM commercialisée par DRT.

Le monol et le polyol précités représentent respectivement 0 à 10 % et 0 à 25 % en poids des polyols.

L'isocyanate appartient au groupe constitué par :
- les diisocyanates trimérisés en isocyanurates qui dérivent de diisocyanates choisis dans le groupe constitué du diphénylméthane-4, 4'-diisocyanate, diphénylméthane-2, 4'-diisocyanate, des produits d'hydrogénation des diisocyanates précités, toluylène-2,4-diisocyanate, toluylène-2,6-diisocyanate, hexaméthylènediisocyanate, isophoronediisocyanate, naphtylène-1,5-diisocyanate et leurs mélanges ;
- et les produits de réaction de diisocyanates avec l'eau tels que par exemple le produit de réaction du toluènediisocyanate ou de l'hexaméthylène-diisocyanate avec l'eau (ce dernier étant vendu sous la dénomination Desmodur®N par Bayer), et leurs mélanges.

On préfère un hexaméthylènediisocyanate trimérisé ou un isophoronediisocyanate trimérisé.

De manière générale, l'isocyanate renferme moins de 0,2 % en poids de monomères isocyanate libres.

De préférence, le prépolymère polyuréthane présente une teneur en groupes isocyanates comprise entre 2 et 15 % en poids.

L'adhésif thermofusible réticulable par l'humidité selon l'invention peut comprendre des additifs usuels connus de l'homme du métier tels que des charges, des agents tackifiants, des plastifiants, des promoteurs d'adhérence tels que des composés comportant des groupes silanyles et des catalyseurs qui accélèrent la réticulation par l'humidité, par exemple des catalyseurs métalliques tels que le dilaurate de dibutylétain ou des catalyseurs aminés tels que le dimorpholinodiéthyléther.

On peut préparer les adhésifs polyuréthanes réticulables par l'humidité selon l'invention en faisant réagir les polyols et le cas échéant les autres composés hydroxylés, éventuellement déshydratés à haute température sous vide, avec les isocyanurates à l'abri de l'humidité et le cas échéant sous gaz protecteur, à une température pouvant varier de 90 à 120°C jusqu'à ce que l'on obtienne la teneur souhaitée en groupes isocyanates. A l'adhésif ainsi obtenu, on ajoute par mélange les éventuels additifs.

Les adhésifs thermofusibles réticulables par l'humidité selon l'invention sont adaptés au collage industriel de mailles textiles comportant une multitude de fines boucles, par exemple en cellulose, en polyamide ou en polytéréphtalate d'éthylène, et de films plastiques, par exemple en polyéthylène, en polypropylène ou en polytéréphtalate d'éthylène. Ce collage industriel fonctionne à une cadence élevée, c'est-à-dire à une vitesse pouvant excéder 150 mètres par minute, voire davantage.

Les adhésifs selon l'invention présentent en outre une teneur en monomère isocyanate libre inférieure à 0,15 % en poids du prépolymére polyuréthane, une faible tension de vapeur à la température d'utilisation (100 à 130°C) et, par voie de conséquence, un caractère toxique limité, une excellente aptitude à fixer les matériaux (pouvoir piégeant) et une élasticité satisfaisante après réticulation par l'humidité.

Les exemples qui suivent permettent d'illustrer l'invention.

### EXEMPLE 1

Dans un réacteur sous atmosphère d'azote, on introduit les composés suivants :
- 58,8 parties en poids d'isocyanurate d'hexaméthylènediisocyanate (teneur en NCO : 21,6 ± 0,3 % ; viscosité Brookfield : 3250 ± 750 mPa.s à 23°C ; hexaméthylènediisocyanate libre : < 0,2 % en poids ; désignation commerciale : Desmodur® N3300-BAYER),
- 41,15 parties en poids du produit de condensation d'acide adipique et d'un mélange de 2,2-diméthyl-1,3-propanediol, 1,2-éthanediol et 1,6-hexanediol (polyester polyol aliphatique ; indice d'hydroxyle : 18-24 ; masse moléculaire : 5000 ; fonctionnalité OH : 2 ; désignation commerciale : Dynacoll® 7250-HÜLS),

Le mélange est porté à une température de l'ordre de 95 à 100°C.

Après achèvement de la réaction, on introduit 0,05 partie en poids de dilaurate de dibutylétain (DBTL). On récupère un adhésif limpide très visqueux à 23°C, ayant une teneur en NCO égale à 11,5 % mesurée selon la norme AFNOR T52-132, une viscosité Brookfield à 85°C égale à 2900 mPa.s et qui, en refroidissant, présente une faible élasticité.

Les propriétés mécaniques de l'adhésif obtenu sont définies par la résistance à la rupture et l'allongement à la rupture mesurées dans les conditions ci-après.

On coule l'adhésif fondu à 100°C sur du papier siliconé à l'aide d'un filmographe préchauffé à 100°C pour former un film de 25 cm de longueur, 9 cm de largeur et 300 µm d'épaisseur. Le film est soumis à une température de 23°C et une humidité relative de 50 % jusqu'à la polymérisation complète (de l'ordre de 4 semaines).

Après avoir retiré le papier siliconé, on découpe le film avec un emporte-pièce pour former des éprouvettes (type H2-Norme AFNOR T46002) que l'on tractionne avec une machine d'essai (Type DY 30; ADAMEL-LHOMARGY) à la vitesse constante de 100 mm/min. Les mesures sont effectuées sur 5 éprouvettes.

| | |
|---|---|
| Résistance à la rupture | 12,6 ± 1,5 MPa |
| Allongement à la rupture | 35 ± 4 % |

On utilise l'adhésif pour réaliser industriellement le contre-collage d'une maille textile en polyamide (25 g/m²) sur un film de polyéthylène. L'adhésif fondu à 100°C est déposé au moyen d'une buse à lèvre sur le film qui défile à la vitesse de 175 mètres par minute. Le grammage de l'adhésif est d'environ 4 g/m². La maille textile est ensuite déposée sur le film et l'assemblage est calandré et bobiné. On mesure la valeur du pelage de l'assemblage après 1 et 4 semaines de polymérisation (23°C et 50 % d'humidité relative) dans les conditions suivantes :
On découpe l'assemblage en bandes de 25 mm de large, et on renforce la face extérieure en polyéthylène avec un ruban adhésif. Les bandes obtenues sont soumises à une traction en pelage 180° à la vitesse constante de 500 mm/min (machine d'essai Type DY 30 ; ADAMEL-LHOMARGY). Les mesures sont effectuées sur 5 bandes.

La résistance au pelage est égale à 2,5 N/25 mm (1 semaine) et 5 N/25 mm (4 semaines).

### EXEMPLE 2

On procède dans les conditions de l'exemple 1 modifiées en ce que l'on utilise 30 parties en poids de Desmodur® N3300, 25 parties en poids de Dynacoll® 7250, 45 parties en poids de Dynacoll® 7130 et 0,01 partie en poids de DBTL.

Le Dynacoll® 7130 est le produit de condensation d'un mélange d'acide 1,3-benzènedicarboxylique et d'acide adipique et d'un mélange de 1,4-benzènedicarboxylate, 2,2-diméthyl-1,3-propanediol, 1,2-éthanediol et 3-hydroxy-2,2-diméthylpropyl-3-hydroxy-2,2-diméthylpropanoate (polyester polyol aliphatico-aromatique; indice hydroxyle : 31-39 ; masse moléculaire : 3000 ; fonctionnalité OH : 2 ; commercialisé par HÜLS).

On récupère un adhésif blanc, solide à 23°C, ayant une teneur en NCO égale à 5,04 %.

A 130°C, l'adhésif est un liquide blanc, de viscosité Brookfield égale à 25800 mPa.s et qui présente un pouvoir collant suffisant pour adhérer sur un film plastique. En refroidissant, l'adhésif présente une forte élasticité.

L'adhésif présente:
- une résistance à la rupture égale à 10,8 ± 2,3 MPa
- un allongement à la rupture égal à 359 ± 49 %.

La résistance au pelage du film obtenu dans les conditions industrielles de l'exemple 1 est égale à 5 N/25 mm (4 semaines).

### EXEMPLE 3

Dans un réacteur sous atmosphère d'azote, on introduit les composés suivants :
- 29,9 parties en poids d'isocyanurate d'hexaméthylènediisocyanate (teneur en NCO: 21,6 ± 0,3%; viscosité Brookfield : 3250 ± 750 mPa.s à 23°C ; hexaméthylènediisocyanate libre: < 0,2 % en poids; désignation commerciale: Desmodur® N3300-BAYER),
- 25,2 parties en poids du produit de condensation d'un mélange d'acide isophtalique, d'acide téréphtalique et d'acide adipique et d'un mélange de 2,2-diméthylpropane-1,3-diol, d'éthylène glycol et d'hexane-1,6-diol (polyester polyol aliphatique ; indice hydroxyle : 27-34 ; masse moléculaire : 3500 ; fonctionnalité OH : 2 ; Tg = -30°C ; dénomination commerciale : Dynacoll® 7230-HÜLS),
- 44,9 parties en poids de copolymère d'oxyde d'éthylène et d'oxyde de propylène (polyéther polyol. masse moléculaire: 3800; fonctionnalité OH : 2 ; désignation commerciale : Voranol® EP 1900-DOW CHEMICALS).

Le mélange est porté à une température de l'ordre de 85 à 90°C. Après 5 heures de réaction, on introduit dans le réacteur 0,05 partie en poids de dilaurate de dibutylétain (DBTL). Après achèvement de la réaction, on introduit à nouveau 0,05 partie en poids de DBTL. On récupère un adhésif visqueux ayant une teneur en NCO égale à 5% mesurée selon la norme AFNOR T52-132 et une viscosité Brookfield à 90°C égale à 2200 mPa.s.

L'adhésif ainsi obtenu est utilisé de manière satisfaisante pour produire un assemblage film polyéthylène/maille textile par dépôt de l'adhésif à l'état fondu sur le film défilant à une vitesse supérieure à 100 m/min, dépôt de la maille, puis calandrage et bobinage.

## Revendications

1. Utilisation d'un adhésif thermofusible réticulable par l'humidité pour le collage d'un élément de fixation sous la forme d'une maille textile comportant une multitude de fines boudes et d'un film plastique, **caractérisée en ce que** l'adhésif comprend un prépolymère polyuréthane obtenu par polyaddition d'au moins un polyol avec au moins un isocyanate choisi dans le groupe des diisocyanates trimérisés en isocyanurates et des produits de réaction de diisocyanates avec l'eau, ledit prépolymère ayant une teneur en NCO libres comprise entre 1 et 25 % en poids.

2. Utilisation selon la revendication 1, **caractérisée en ce que** la teneur en NCO libres du prépolymère est comprise entre 2 et 15 % en poids.

3. Utilisation selon la revendication 1 ou 2, **caractérisée en ce que** l'isocyanate est un diisocyanate trimérisé en isocyanurate qui dérive de diisocyanates choisis dans le groupe constitué du diphénylméthane-4, 4'-diisocyanate, diphénylméthane-2, 4'-diisocyanate, des produits d'hydrogénation des diisocyanates précités, toluylène-2,4-diisocyanate, toluylène-2,6-diisocyanate, hexaméthylènediisocyanate, isophoronediisocyanate, naphtylène-1,5-diisocyanate et leurs mélanges.

4. Utilisation selon l'une des revendications 1 à 3, **caractérisée en ce que** l'isocyanate est l'hexaméthylènediisocyanate trimérisé ou l'isophoronediisocyanate trimérisé.

5. Utilisation selon l'une des revendications 1 à 4, **caractérisée en ce que** le polyol est choisi parmi les polyéthers polyols, les polyesters poiyols et les polyols insaturés.

6. Utilisation selon l'une des revendications 1 à 5, **caractérisée en ce que** le polyol est choisi parmi les polyesters polyols ayant une masse moléculaire moyenne comprise entre 250 et 7000 et une fonctionnalité OH comprise entre 2 et 3.

7. Utilisation selon l'une des revendications 1 à 6, **caractérisée en ce que** les polyesters polyols résultent de la condensation de polyols choisis parmi l'éthanediol, le 1,2-propanediol, le 1,3-propanediol, le glycérol, le triméthylolpropane, le 1,6-hexanediol, le 1,2,6-hexanetriol, le butènediol, le sucrose, le glucose, le sorbitol, le pentaérythritol, le mannitol, la triéthanolamine, la n-méthyldiméthanolamine et les mélanges de ces composés avec un acide tel que l'acide 1,6-hexanedioïque, l'acide dodécanedioïque, l'acide azélaïque, l'acide sébacique, l'acide adipique, l'acide 1,18-octadécanedioïque, l'acide phtalique, l'acide succinique et les mélanges de ces acides, un anhydride insaturé tel que l'anhydride maléique ou phtalique, ou une lactone telle que la caprolactone.

8. Utilisation selon l'une des revendications 1 à 7, **caractérisée en ce que** les polyesters polyols résultent de la condensation de l'éthanediol, du 1,3-propanediol et/ou du 1,6-hexanediol avec l'acide adipique et/ou l'acide phtalique.

9. Utilisation selon la revendication 1, **caractériséee en ce que** la maille textile est en cellulose, en polyamide ou en polytéréphtalate d'éthylène.

10. Utilisation selon la revendication 1, **caractériséee en ce que** le film plastique est un film en polyéthylène, polypropylène ou polytéréphtalate d'éthylène.

11. Article destiné à l'hygiène contenant un élément de fixation sous forme d'une maille textile collé au moyen de l'adhésif selon l'une des revendications 1 à 8.

## Patentansprüche

1. Verwendung eines Schmelzklebstoffes, der durch Feuchtigkeit vernetzbar ist, zum Verkleben eines Befestigungselements in Form eines textilen Maschenmaterials, das eine Vielzahl von feinen Schlingen aufweist, und einer Kunststoffolie, **dadurch gekennzeichnet, daß** der Klebstoff ein Polyurethan-Präpolymer enthält, das durch Polyaddition mindestens eines Polyols und mindestens eines Isocyanats hergestellt wird, das unter den in Form von Isocyanuraten trimerisierten Diisocyanaten und den Reaktionsprodukten von Diisocyanaten mit Wasser ausgewählt sind, wobei das Präpolymer einen Gehalt an freien NCO-Gruppen im Bereich von 1 bis 25 Gew.-% aufweist.

2. Verwendung nach Anspruch 1, **dadurch gekennzeichnet, daß** der Gehalt an freien NCO-Gruppen in dem Präpolymer im Bereich von 2 bis 15 Gew.-% liegt.

3. Verwendung nach Anspruch 1 oder 2, **dadurch gekennzeichnet, daß** das Isocyanat ein trimerisiert als Isocyanurat vorliegendes Diisocyanat ist, das von Diisocyanaten abgeleitet ist, die unter Diphenylmethan-4,4'-diisocyanat, Diphenylmethan-2,4'-diisocyanat, den Hydrierungsprodukten der vorgenannten Diisocyanate, 2,4-Toluylendiisocyanat, 2,6-Toluylen-diisocyanat, Hexamethylendisocyanat, Isophorondiisocyanat, 1,5-Naphthalin-diisocyanat und deren Gemischen ausgewählt ist.

4. Verwendung nach einem der Ansprüche 1 bis 3, **dadurch gekennzeichnet, daß** es sich bei dem Isocyanat um trimerisiertes Hexamethylendiisocyanat oder trimerisiertes Isophorondiisocyanat handelt.

5. Verwendung nach einem der Ansprüche 1 bis 4, **dadurch gekennzeichnet, daß** das Polyol unter den Polyetherpolyolen, Polyesterpolyolen und den ungesättigten Polyolen ausgewählt ist.

6. Verwendung nach einem der Ansprüche 1 bis 5, **dadurch gekennzeichnet, daß** das Polyol unter den Polyesterpolyolen mit einem mittleren Molekulargewicht von 250 bis 7000 und einer OH-Funktionalität von 2 bis 3 ausgewählt ist.

7. Verwendung nach einem der Ansprüche 1 bis 6, **dadurch gekennzeichnet, daß** die Polyesterpolyole bei der Kondensation von Polyolen, die unter Ethandiol, 1,2-Propandiol, 1,3-Propandiol, Glycerin, Trimethylolpropan, 1,6-Hexandiol, 1,2,6-Hexantriol, Butandiol, Saccharose, Glucose, Sorbit, Pentaerythrit, Mannit, Triethanolamin, N-Methyldimethanolamin und den Gemischen dieser Verbindungen ausgewählt sind, und Säuren, die unter 1,6-Hexandisäure, Dodecandisäure, Azelainsäure, Sebacinsäure, Adipinsäure, 1,18-Octadecandisäure, Phthalsäure, Bernsteinsäure und Gemischen dieser Säuren ausgewählt sind, ungesättigten Anhydriden, wie Maleinsäureanhydrid und Phthalsäureanhydrid, oder Lactonen, wie Caprolacton, entstehen.

8. Verwendung nach einem der Ansprüche 1 bis 7, **dadurch gekennzeichnet, daß** die Polyesterpolyole bei der Kondensation von Ethandiol, 1,3-Propandiol und/oder 1,6-Hexandiol mit Adipinsäure und/oder Phthalsäure entstehen.

9. Verwendung nach Anspruch 1, **dadurch gekennzeichnet, daß** das textile Maschenmaterial aus Cellulose, Polyamid oder Polyethylenterephthalat besteht.

10. Verwendung nach Anspruch 1, **dadurch gekennzeichnet, daß** die Kunststoffolie eine Folie aus Polyethylen, Polypropylen oder Polyethylenterephthalat ist.

11. Gegenstand für die Hygiene, der ein Befestigungselement in Form eines textilen Maschenmaterials enthält, das mit Hilfe eines Klebstoffes nach einem der Ansprüche 1 bis 8 verklebt ist.

## Claims

1. Use of a moisture-crosslinkable hot-melt adhesive for the adhesive bonding of a fixing component in the form of a textile mesh containing a multitude of fine loops and of a plastic film, **characterized in that** the adhesive comprises a polyurethane prepolymer obtained by polyaddition of at least one polyol to at least one isocyanate chosen from the group of diisocyanates trimerized as isocyanurates and reaction products of diisocyanates with water, the said prepolymer having a content of free NCO groups of between 1 and 25% by weight.

2. Use according to Claim 1, **characterized in that** the content of free NCO groups in the prepolymer is between 2 and 15% by weight.

3. Use according to Claim 1 or 2, **characterized in that** the isocyanate is a diisocyanate trimerized as isocyanurate which derives from diisocyanates chosen from the group composed of diphenylmethane 4,4'-diisocyanate, diphenylmethane 2,4'-diisocyanate, hydrogenation products of the abovementioned diisocyanates, toluylene 2,4-diisocyanate, toluylene 2,6-diisocyanate, hexamethylene diisocyanate, isophorone diisocyanate, naphthylene 1,5-diisocyanate and their mixtures.

4. Use according to one of Claims 1 to 3, **characterized in that** the isocyanate is trimerized hexamethylene diisocyanate or trimerized isophorone diisocyanate.

5. Use according to one of Claims 1 to 4, **characterized in that** the polyol is chosen from polyether polyols, polyester polyols and unsaturated polyols.

6. Use according to one of Claims 1 to 5, **characterized in that** the polyol is chosen from polyester polyols having an average molecular mass of between 250 and 7000 and an OH functionality of between 2 and 3.

7. Use according to one of Claims 1 to 6, **characterized in that** the polyester polyols result from the condensation of polyols chosen from ethanediol, 1,2-propanediol, 1,3-propanediol, glycerol, trimethylolpropane, 1, 6-hexanediol, 1,2,6-hexanetriol, butenediol, sucrose, glucose, sorbitol, pentaerythritol, mannitol, triethanolamine, N-methyldimethanolamine and mixtures of these compounds with an acid, such as 1,6-hexanedioic acid, dodecanedioic acid, azelaic acid, sebacic acid, adipic acid, 1,18-octadecanedioic acid, phthalic acid, succinic acid and mixtures of these acids, an unsaturated anhydride, such as maleic or phthalic anhydride, or a lactone, such as caprolactone.

8. Use according to one of Claims 1 to 7, **characterized in that** the polyester polyols result from the condensation of ethanediol, 1,3-propanediol and/or 1,6-hexanediol with adipic acid and/or phthalic acid.

9. Use according to Claim 1, **characterized in that** the textile mesh is made of cellulose, of polyamide or of poly(ethylene terephthalate).

10. Use according to Claim 1, **characterized in that** the plastic film is a film made of polyethylene, polypropylene or poly(ethylene terephthalate).

11. Article intended for hygiene containing a fixing component in the form of a textile mesh adhesively bonded by means of the adhesive according to one of Claims 1 to 8.
